# EUROPÄISCHE PATENTSCHRIFT

(11) **EP 1 430 765 B1**
(45) Veröffentlichungstag und Bekanntmachung des Hinweises auf die Patenterteilung: **04.10.2006**
(21) Anmeldenummer: 03027602.6
(22) Anmeldetag: 02.12.2003
(51) Int. Cl.: A01D 43/08

(54) **Maschine zum Mähen von stängelartigem Erntegut und lösbarer Räumer**
Machine for mowing of stalk-like crop and releasable cleaning element
Machine pour faucher des plantes à tige et élément de nettoyage détachable

(30) Priorität: 12.12.2002 DE 10258013
(43) Veröffentlichungstag der Anmeldung: 23.06.2004
(73) Patentinhaber: Maschinenfabrik Kemper GmbH & Co. KG, 48973 Stadtlohn (DE)
(72) Erfinder: Brüning, Ulrich, 48653 Coesfeld (DE)
(74) Vertreter: Holst, Sönke

(56) Entgegenhaltungen:
- EP-A- 0 508 189
- EP-A- 0 760 200
- EP-A- 1 040 746
- DE-C- 19 933 778

## Beschreibung

Die Erfindung betrifft eine Maschine zum Mähen von stängelartigem Erntegut, mit einem in Bewegung versetzbaren Förderelement, das mit über den Umfang verteilten Mitnehmern zum Transport von Pflanzenstängeln ausgestattet ist, die während des Betriebs einen Abstreifschlitz durchlaufen, wobei das Förderelement mit einem quer zur Förderrichtung überstehenden Räumer versehen ist, der geeignet ist, Pflanzenmaterial, insbesondere Lieschenblattansammlungen, aus dem Abstreifschlitz zu entfernen, sowie einen lösbaren Räumer für diese Maschine.

In der EP 0 760 200 A ist eine Maschine zum Ernten von Mais beschrieben. Einzugs- und Mähtrommeln, die aus übereinander angeordneten, mit Aussparungen versehenen Förderscheiben und einer darunter angeordneten Schneidscheibe aufgebaut sind, dienen zum Abschneiden und Einziehen der Pflanzen. An der Rückseite der Einzugs- und Mähtrommeln werden die Pflanzen durch Abstreifelemente aus den Aussparungen entfernt. Die Förderscheiben laufen durch Abstreifschlitze hindurch, die durch die Abstreifelemente definiert sind. In diesen Abstreifschlitzen sammeln sich im Betrieb Pflanzen an, insbesondere Lieschenblätter. Die Pflanzenansammlungen verursachen unerwünschte Reibung und behindern den Transport der Pflanzen durch die Maschine.

Bei von der Anmelderin vertriebenen derartigen Maschinen sind daher an den vorlaufenden Flanken jeweils einer Aussparung jeder Förderscheibe nach oben und unten überstehende Räumer angebracht, um die Pflanzenreste aus den Abstreifschlitzen zu entfernen. Die Räumer sind langgestreckte, quaderförmige Elemente, die bisher über ihre gesamte Länge an den Förderscheiben angeschweißt wurden. Da sie sich während des Betriebs abschleifen und abgerundete Räumer dazu neigen, die Pflanzen in die Abstreifschlitze hineinzuziehen, erweisen sich gelegentliche Wechsel der Räumer als sinnvoll. Die aufzutrennende und anschließend neu anzubringende Schweißverbindung erfordert jedoch einen hohen Zeit- und somit Kostenaufwand. Alternativ kann der Verschleiß an den Räumern durch Auftragschweißung mit Stahlelektroden ausgeglichen werden, was ebenfalls aufwändig ist.

In der DE 201 12 272 U und der DE 199 14 321 A werden lösbar angebrachte Schneidelemente für Pflückwalzen von Maispflückern vorgeschlagen. Der Fachmann hat keinen Anlass, diese auf Maschinen oben genannter Art zu übertragen.

Das der Erfindung zu Grunde liegende Problem wird darin gesehen, eine Maschine zum Mähen von stängelartigem Erntegut eingangs genannter Art dahingehend zu verbessern, dass ein Wechsel der Räumer vereinfacht wird.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise kann er schneller und kostengünstiger gewechselt werden.

In bevorzugten Ausführungsformen ist der Räumer nur in seinen Endbereichen mit dem Förderelement verbunden, was das Lösen und Anbringen wesentlich vereinfacht. Dabei kann an einem ersten Ende des Räumers eine Steckverbindung vorgesehen sein, die es erlaubt, ihn auf das Förderelement aufzustecken, wodurch er in den quer zur Aufsteckbewegung liegenden Richtungen fixiert ist.

Die Steckverbindung kann einen Schlitz im Räumer umfassen, zwischen dem ein Bereich des Förderelements aufgenommen wird. Andererseits wäre es, insbesondere bei dickeren Förderelementen, auch denkbar, den Schlitz in das Förderelement einzubringen, während der Räumer einen in den Schlitz einführbaren Bereich aufweist.

Während der Schlitz den Räumer in der Regel in der Ebene des Förderelements - d. h. in der sich quer zur Förderrichtung erstreckenden Richtung - fixiert, kann der Räumer insbesondere in der Förderrichtung des Förderelements durch eine entsprechende Aussparung im Förderelement arretiert werden. Analog kann auch hier eine Aussparung im Räumer vorgesehen sein, die mit einem entsprechenden Merkmal des Förderelements zusammenwirkt.

Die Befestigung des Räumers am Förderelement an seinem zweiten Ende kann durch eine Schweißverbindung erfolgen, die sich vorzugsweise - zwecks leichterer Trennung und Neuanbringung - nur über einen Teil der Länge des Räumers erstreckt.

Alternativ oder zusätzlich kann der Räumer an seinem zweiten Ende auch durch eine Schraube am Förderelement befestigt werden, deren Längs- und Drehachse sich vorzugsweise in der Förderrichtung erstreckt.

Bei dem Förderelement kann es sich um beliebige Ausführungsformen handeln. Es kann z. B. eine Förderwalze mit fingerartigen Mitnehmern sein, deren Drehachse sich horizontal oder vertikal erstrecken kann. Es kann auch ein um zwei Umlenkpunkte umlaufender Ketten- oder Bandförderer mit abstehenden Mitnehmern sein (s. DE 199 47 288 C). Vorzugsweise kommt die Erfindung jedoch bei Förderelementen zur Anwendung, die eine oder mehrere Förderscheiben mit zumindest näherungsweise vertikalen Drehachsen aufweisen und zur Aufnahme von Pflanzenstängeln mit Aussparungen versehen sind. Die Mitnehmer befinden sich dann jeweils zwischen zwei Aussparungen.

In einer bevorzugten Ausführungsform ist das erste Ende des Räumers der Drehachse des Förderelements zugewandt. Es wäre aber auch denkbar, das erste Ende außen anzuordnen und das zweite Ende innen. Anzumerken ist außerdem, dass der Räumer zwar vorzugsweise an einem Mitnehmer (bei einer Förderscheibe an einer nachlaufenden Flanke einer Aussparung) angebracht ist, dass es aber auch möglich ist, ihn an einer beliebigen anderen Stelle des Förderelements anzubringen, z. B. an einer vorlaufenden Flanke einer Aussparung einer Förderscheibe oder einem ihm zugeordneten Schlitz in einer Förderscheibe. Auch wäre es möglich, einen ersten Räumer an einer beliebigen Stelle der Oberseite des Förderelements anzubringen und/oder einen zweiten Räumer an einer beliebigen Stelle seiner Unterseite. Diese Räumer können durch Schrauben mit dem Förderelement und vorzugsweise auch untereinander verbunden werden.

Der Schutzbereich erstreckt sich auch auf für die Verwendung an der erfindungsgemäßen Maschine eingerichtete Räumer.

In den Zeichnungen sind zwei nachfolgend näher beschriebene Ausführungsbeispiele der Erfindung dargestellt. Es zeigt:
- Fig. 1: eine Draufsicht auf eine erfindungsgemäße Maschine zum Mähen von stängelartigem Erntegut,
- Fig. 2: eine perspektivische Ansicht eines Abstreifelements,
- Fig. 3: eine perspektivische Ansicht eines anderen Abstreifelements,
- Fig. 4: eine perspektivische Ansicht eines weiteren Abstreifelements,
- Fig. 5: eine Draufsicht auf eine Förderscheibe mit Räumern in zwei unterschiedlichen Ausführungsformen,
- Fig. 6: eine seitliche Ansicht einer ersten Ausführungsform eines Räumers, und
- Fig. 7: eine seitliche Ansicht einer zweiten Ausführungsform eines Räumers.

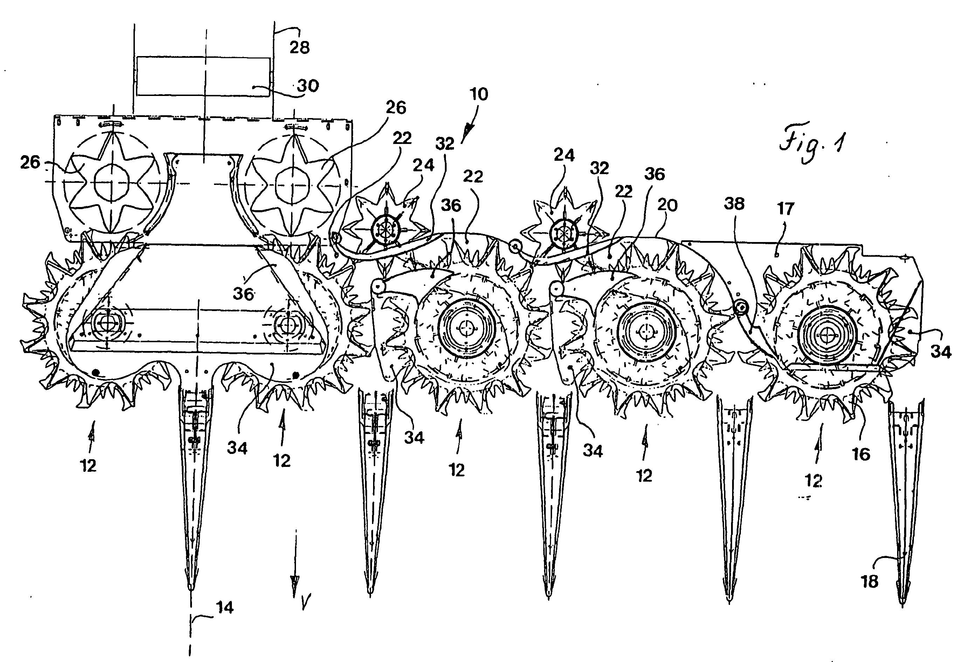

Die in der Figur 1 dargestellte Maschine 10 zum Mähen von stängelartigem Erntegut weist eine Reihe von Einzugs- und Mäheinrichtungen 12 auf, die symmetrisch zu einer Längsmittelebene 14 der Maschine 10 angeordnet sind. Links der Längsmittelebene 14 ist aus Gründen der Übersichtlichkeit nur eine Einzugs- und Mäheinrichtung 12 eingezeichnet, es sind jedoch in der Realität auf beiden Seiten der Längsmittelebene 14 gleich viele Einzugs- und Mäheinrichtungen 12 vorhanden. Die Einzugs- und Mäheinrichtungen 12 sind jeweils aus einer (nicht eingezeichneten) unteren Schneidscheibe, die um eine vertikale Achse rotiert, und koaxial darüber angeordneten, als Förderelement dienenden Förderscheiben 16 zusammengesetzt, deren Umfang mit taschenförmigen Aussparungen ausgestattet ist. Zwischen den Aussparungen ergibt sich jeweils ein Mitnehmer zur Förderung der Pflanzen. Den Einzugs- und Mäheinrichtungen 12 sind Halmteiler 18 vorgeordnet. Zwischen der Rückseite der Einzugs- und Mäheinrichtungen 12 und einer Rückwand 20 der Maschine 10 ist ein Querförderkanal 22 gebildet, durch den das von den Einzugs- und Mäheinrichtungen 12 abgeerntete Gut seitlich zur Mitte der Maschine 10 transportiert wird. Die Elemente der Maschine 10 werden durch einen Rahmen 17 gehaltert.

Der seitliche Transport im Querförderkanal 22 wird durch um vertikale Achsen rotativ angetriebene Querfördertrommeln 24 unterstützt, die Schlitze in der Rückwand 20 durchgreifen. In Vorwärtsbewegungsrichtung V hinter den beiden mittleren Einzugs- und Mäheinrichtungen 12 sind Schrägfördertrommeln 26 mit nach vorn geneigten Drehachsen angeordnet, die das Erntegut aus dem Querförderkanal 22 nach hinten in einen Einzugskanal 28 eines Feldhäckslers mit darin übereinander angeordneten Einzugswalzen 30 fördern. Die Einzugs- und Mäheinrichtungen 12 sind mit flachen Abdeckungen 34 versehen.

Beim Erntevorgang wird die Maschine 10 am Einzugskanal 28 eines Feldhäckslers befestigt und in Vorwärtsbewegungsrichtung V über ein Feld bewegt. Das gegebenenfalls von Halmteilern 18 seitlich abgelenkte stängelartige Erntegut wird von den Einzugs- und Mäheinrichtungen 12 abgeschnitten und in den Querförderkanal 22 hineingefördert. Durch die Förderwirkung der Rückseiten der stromab folgenden Einzugs- und Mäheinrichtungen 12 und der Querfördertrommeln 24 erreicht das Erntegut die Rückseite der beiden mittleren Einzugs- und Mäheinrichtungen 12, wo es nach hinten umgelenkt wird. Die Schrägfördertrommeln 26 führen das Erntegut dort den Einzugswalzen 30 des Feldhäckslers zu, wo es gehäckselt und auf einem Wagen abgelegt wird.

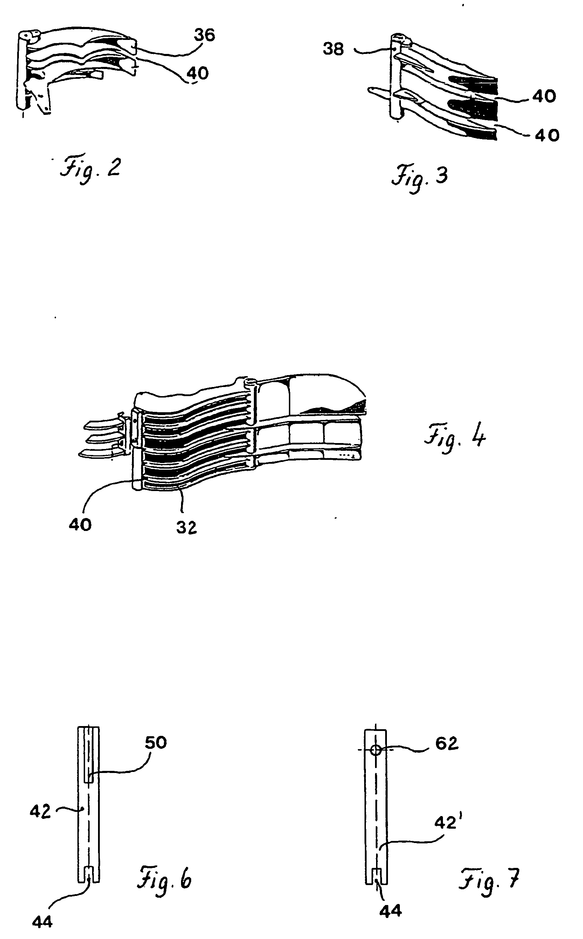

An den Stellen, an denen die Förderscheiben 16 der Einzugs- und Mäheinrichtungen 12 das Gut in den Querförderkanal 22 abgeben, sind Abstreifelemente 36 bzw. 38 angeordnet, die in Figur 2 und 3 perspektivisch dargestellt sind. Die Abstreifelemente 36 der inneren Einzug- und Mäheinrichtungen 12 und die Abstreifelemente 38 der äußeren Einzugs- und Mäheinrichtungen 12 sind aus übereinander angeordneten Blechen zusammengesetzt, zwischen denen Abstreifschlitze 40 gebildet werden, in denen die Förderscheiben 16 rotieren. Auch an der Rückwand 20 der Maschine 10 sind Abstreifelemente 32 angeordnet, die in der Figur 4 näher dargestellt sind. Ähnliche Abstreifelemente sind auch den Schrägfördertrommeln 26 zugeordnet.

Die äußeren Bereiche der Förderscheiben 16 der Einzugs- und Mäheinrichtungen 12 drehen sich somit durch die Abstreifschlitze 40 hindurch. Die Abstreifelemente 36, 38 nehmen das Erntegut aus den Aussparungen der Förderscheiben heraus, so dass es in den Querförderkanal 22 und von dort in den Einzugskanal 28 gelangt und nicht fortdauernd mit den Förderscheiben 16 rotiert. Die Abstreifelemente 32 verbessern die Förderung des Ernteguts entlang der Rückwand 20. In den Abstreifschlitzen 40 lagern sich während des Betriebs nach und nach Pflanzenteile an, welche unerwünschte Reibung erzeugen und den Transport der Pflanzen behindern.

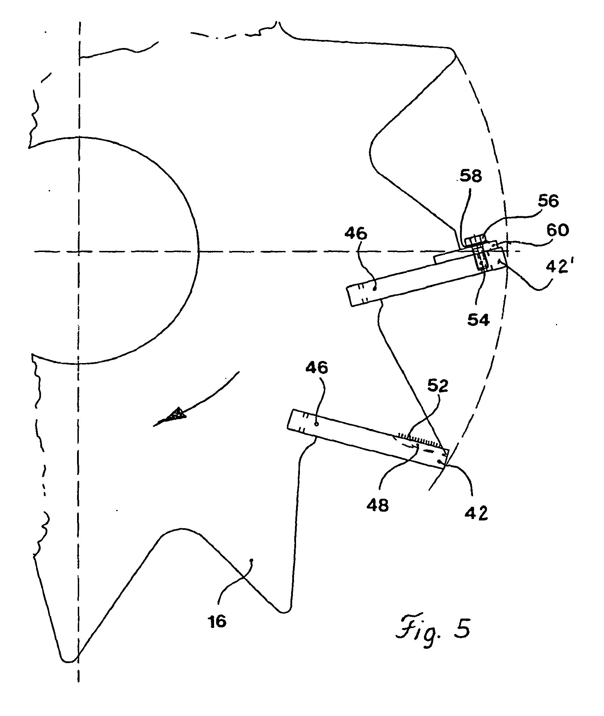

Um diese Pflanzenteile aus den Abstreifschlitzen 40 selbsttätig zu entfernen, ist in an sich bekannter Weise an der nachlaufenden, sich etwa radial erstreckenden Flanke jeweils einer taschenförmigen Aussparung jeder Förderscheibe 16 ein nach oben und unten von der Förderscheibe 16 überstehender Räumer 42 bzw. 42' angebracht, wie in der Figur 5 dargestellt. Der Räumer 42, 42' ist ein langgestrecktes Element mit rechteckigem Querschnitt und besteht vorzugsweise aus verschleißfestem, hochwertigen Material. Die Räumer 42, 42' erstrecken sich näherungsweise radial zur Drehachse der Förderscheiben 16; ihre gedachte Verlängerung schneidet jedoch nicht die Drehachse der Förderscheibe 16, sondern schließt einen Winkel (in der dargestellten Ausführungsform von etwa 15°) mit dem Radius der Förderscheibe 16 ein. Die Räumer 42, 42' entfernen die Pflanzenreste, bei denen es sich insbesondere um Lieschen handelt, von den Abstreifelementen 36, 38 und 32. Durch die nicht-radiale Anordnung der Räumer 42 erzielt man eine ziehende Arbeitsweise der Räumer, die das Entfernen unerwünschten Materials aus den Abstreifschlitzen 40 begünstigt. Weiterhin liegen die mit dem zu entfernenden Material in Wechselwirkung kommenden Kanten der Räumer 42, 42' vor der nachlaufenden Flanke der Aussparung der Förderscheibe 16, so dass sich trotz hinreichender Stabilität der Befestigung der Räumer 42, 42' keine wesentlichen Änderungen der Formen der Aussparungen in der Förderscheibe 16 vor und nach dem Räumer 42 ergeben. Auch diese Aussparungen können somit Pflanzenstängel ohne Schwierigkeiten aufnehmen und fördern.

Die Räumer 42 unterliegen einem stetigen Verschleiß. Wenn sie abgerundet sind, tendieren sie dazu, das Pflanzenmaterial in die Abstreifschlitze 40 hineinzuziehen; sie verlieren dann ihre Wirkung.

Damit verschlissene Räumer 42 leicht, schnell und kostengünstig ausgetauscht werden können, schlägt die Erfindung lösbare Ausführungsformen vor. In der Figur 5 sind an einer Förderscheibe 16 zu Illustrationszwecken zwei unterschiedliche Ausführungsformen von Räumern dargestellt; wie oben erwähnt, hat in der Regel aber jede Förderscheibe 16 nur einen Räumer (denkbar wäre aber auch, zwei oder mehr Räumer vorzusehen).

Der Räumer 42 gemäß der ersten Ausführungsform ist an seinem ersten, inneren Ende in der durch die Förderscheibe 16 definierten Ebene mit einem Schlitz 44 versehen, wie in der Figur 6 dargestellt. Dieser Schlitz 44 nimmt die Förderscheibe 16 auf und bewirkt, dass das erste Ende des Räumers 42 in vertikaler Richtung an der Förderscheibe 16 fixiert ist.

Die Förderscheibe 16 ist am Anbringungspunkt des ersten Endes des Räumers 42 mit einer rechteckigen Aussparung 46 versehen, deren Abmessung in Umfangsrichtung etwas größer als die Breite des Räumers 42 ist. Die Aussparung 46 bewirkt, dass der Räumer 42 in der Drehrichtung der Förderscheibe 16 an letzterer fixiert ist. Gemeinsam mit dem Schlitz 44 bildet sie am ersten Ende des Räumers 42 eine lösbare Steckverbindung.

An seinem zweiten, radial äußeren Ende ist der Räumer 42 durch eine Schweißverbindung 52 mit der Förderscheibe 16 verbunden. Die Schweißverbindung 52 besteht aus einer Schweißnaht, die sich am zweiten Ende des Räumers 42 zwischen der Unterund/oder Oberseite der Förderscheibe 16 und dem Räumer 42 erstreckt. Die Schweißverbindung 52 erstreckt sich über etwa ein Viertel der Länge des Räumers 42 vom äußeren Rand der Förderscheibe 16 nach innen. Eine überstehende Zunge 48 der Förderscheibe 16 erstreckt sich in einen zweiten Schlitz 50 des Räumers, um während der Montage und Anbringung der Schweißnaht das Ausrichten und Anbringen des Räumers 42 zu erleichtern. Die Zunge 48 und der Schlitz 50 könnten auch länger oder kürzer sein.

Soll der Räumer 42 ausgetauscht werden, wird die Schweißverbindung 52 aufgetrennt (z. B. mit einer Säge oder einem anderen Schneidgerät), der vorhandene Räumer 42 entlang seiner Längsachse, d. h. etwa radial zur Drehachse der Förderscheibe 16, nach außen abgezogen, ein neuer Räumer 42 in entgegengesetzter Richtung aufgesteckt und schließlich in der dargestellten Weise an der Förderscheibe 16 angeschweißt. Der Wechsel geht wesentlich schneller vonstatten als bei einem über seine ganze Länge angeschweißten Räumer.

Die Figur 5 stellt auch eine zweite Ausführungsform eines Räumers dar, die mit dem Bezugszeichen 42' gekennzeichnet und in der Figur 7 in seitlicher Ansicht wiedergegeben ist. Das erste, innere Ende des Räumers 42' ist durch eine - aus einem Schlitz 44 des Räumers 42' und einer Aussparung 46 in der Förderscheibe 16 aufgebaute - Steckverbindung an der Förderscheibe 16 fixiert, die mit der ersten Ausführungsform des Räumers 42 übereinstimmt. Das zweite Ende des Räumers 42' ist durch eine Schraube 54 befestigt, die sich in der Drehrichtung der Förderscheibe 16 erstreckt (d. h. in azimutaler Richtung) und deren Kopf 56 über eine dazwischenliegende Unterlegscheibe 58 an einer Halteplatte 60 anliegt, die mit der Förderscheibe 16 fest verbunden ist, insbesondere verschweißt. Das Gewinde der Schraube 54 erstreckt sich in eine Gewindebohrung 62 im Räumer 42'. Es wäre auch möglich, auf der anderen Seite der Bohrung 62 eine Mutter vorzusehen, was ein Gewinde erspart.

Soll der Räumer 42' gewechselt werden, wird einfach die Schraube 54 gelöst und entnommen. Der Räumer 42' kann abgezogen und durch einen anderen ersetzt werden, der schließlich durch die Schraube 54 wieder befestigt wird.

Die beschriebenen Räumer 42, 42' können auch an den Förderscheiben der Schrägfördertrommeln 26 und/oder den Querfördertrommeln 24 angebracht werden, wo sie Pflanzenmaterial aus diesen Trommeln zugeordneten Abstreifschlitzen herausfördern.

## Patentansprüche

1. Maschine (10) zum Mähen von stängelartigem Erntegut, mit einem in Bewegung versetzbaren Förderelement (16), das mit über den Umfang verteilten Mitnehmern zum Transport von Pflanzenstängeln ausgestattet ist, die während des Betriebs einen Abstreifschlitz (40) durchlaufen, wobei das Förderelement mit einem quer zur Förderrichtung überstehenden Räumer (42, 42') versehen ist, der geeignet ist, Pflanzenmaterial, insbesondere Lieschenblattansammlungen, aus dem Abstreifschlitz (40) zu entfernen, **dadurch gekennzeichnet, dass** der Räumer (42, 42') so am Förderelement angebracht ist, daß mindestens eines seiner Enden lösbar ist.

2. Maschine (10) nach Anspruch 1, **dadurch gekennzeichnet, dass** der Räumer (42, 42') nur in seinen Endbereichen mit dem Förderelement verbunden ist.

3. Maschine (10) nach Anspruch 1 oder 2, **dadurch gekennzeichnet, dass** der Räumer (42, 42') an einem ersten Ende durch eine Steckverbindung am Förderelement befestigt ist.

4. Maschine (10) nach Anspruch 3, **dadurch gekennzeichnet, dass** der Räumer (42, 42') an seinem ersten Ende mit einem Schlitz (44) versehen ist, in dem ein Bereich des Förderelements aufnehmbar ist.

5. Maschine (10) nach Anspruch 3 oder 4, **dadurch gekennzeichnet, dass** der Räumer (42, 42') an seinem ersten Ende in einer Aussparung (46) des Förderelements angeordnet ist.

6. Maschine (10) nach Anspruch 5, **dadurch gekennzeichnet, dass** der Schlitz (44) den Räumer (42, 42') quer zur Förderrichtung festhält, und dass die Aussparung (46) des Förderelements den Räumer (42, 42') in der Förderrichtung festhält.

7. Maschine (10) nach einem der Ansprüche 1 bis 6, **dadurch gekennzeichnet, dass** der Räumer (42) an seinem zweiten Ende durch eine Schweißverbindung (52) am Förderelement angebracht ist.

8. Maschine (10) nach Anspruch 7, **dadurch gekennzeichnet, dass** die Länge des Räumers (42) ein Mehrfaches der Länge der Schweißverbindung (52) beträgt.

9. Maschine (10) nach einem der Ansprüche 1 bis 6, **dadurch gekennzeichnet, dass** der Räumer (42') an seinem zweiten Ende durch eine Schraube (54) mit dem Förderelement verbunden ist.

10. Maschine (10) nach Anspruch 9, **dadurch gekennzeichnet, dass** sich die Längsachse der Schraube (54) zumindest näherungsweise in der Förderrichtung erstreckt.

11. Maschine (10) nach einem der vorhergehenden Ansprüche, **dadurch gekennzeichnet, dass** das Förderelement eine mit Aussparungen zur Aufnahme von Pflanzenstängeln versehene Förderscheibe (16) ist, die um eine etwa vertikale Achse in Drehung versetzbar ist.

12. Maschine (10) nach einem der vorhergehenden Ansprüche, **dadurch gekennzeichnet, dass** das erste Ende des Räumers (42, 42') der Drehachse des Förderelements zugewandt ist.

13. Lösbarer Räumer (42, 42') für eine Maschine (10) nach einem der vorhergehenden Ansprüche.

## Claims

1. Machine (10) for mowing stalk-like crops and having a conveying element (16) which can be set in rotation and is equipped with drivers distributed about the circumference for transporting plant stalks which, during operation, pass through a stripper slot (40), the conveying element being provided with a remover (42, 42') which protrudes transversely with respect to the conveying direction and is suitable for removing plant material, especially accumulations of husk leaves, from the stripper slot (40), **characterised in that** the remover (42, 42') is so attached to the conveying element that at least one of its ends is detachable.

2. Machine (10) according to claim 1, **characterised in that** the remover (42, 42') is only connected in its end regions to the conveying element.

3. Machine (10) according to claim 1 or 2, **characterised in that** the remover (42, 42') is fastened at a first end to the conveying element by a plug-in connection.

4. Machine (10) according to claim 3, **characterised in that** the remover (42, 42') is provided at its first end with a slot (44) in which a region of the conveying element can be received.

5. Machine (10) according to claim 3 or 4, **characterised in that** the remover (42, 42') is arranged at its first end in a recess (46) of the conveying element.

6. Machine (10) according to claim 5, **characterised in that** the slot (44) holds the remover (42, 42') in place transversely with respect to the conveying direction, and **in that** the recess (46) of the conveying element holds the remover (42, 42') in place in the conveying direction.

7. Machine (10) according to one of claims 1 to 6, **characterised in that** the remover (42) is attached at its second end to the conveying element by a weld joint (52) .

8. Machine (10) according to claim 7, **characterised in that** the length of the remover (42) is a multiple of the length of the weld joint (52).

9. Machine (10) according to one of claims 1 to 6, **characterised in that** the remover (42') is connected at its second end to the conveying element by a screw (54).

10. Machine (10) according to claim 9, **characterised in that** the longitudinal axis of the screw (54) extends at least approximately in the conveying direction.

11. Machine (10) according to one of the preceding claims, **characterised in that** the conveying element is a conveying disc (16) which is provided with recesses for receiving plant stalks and which can be set in rotation about a roughly vertical axis.

12. Machine (10) according to one of the preceding claims, **characterised in that** the first end of the remover (42, 42') faces the axis of rotation of the conveying element.

13. Detachable remover (42, 42') for a machine (10) according to one of the preceding claims.

## Revendications

1. Machine (10) destinée à faucher des végétaux à tiges, comportant un élément convoyeur (16) propre à être entraîné en mouvement, qui est réalisé avec des éléments d'entraînement, qui sont répartis sur le pourtour et sont destinés à transporter les tiges des végétaux et qui, en cours de service, passent à travers une fente de raclage (40), l'élément convoyeur étant muni d'un racloir ((42, 42'), qui s'avance en saillie perpendiculairement à la direction de transport et qui est apte à éliminer hors de la fente de raclage (40) des parties de végétaux, en particulier des amas de feuilles détachées, **caractérisée en ce que** le racloir (42, 42') est monté sur l'élément convoyeur de telle sorte qu'au moins l'une de ses extrémités peut être désolidarisée.

2. Machine (10) selon la revendication 1, **caractérisée en ce que** le racloir (42, 42') est assemblé à l'élément convoyeur uniquement dans ses zones d'extrémité.

3. Machine (10) selon la revendication 1 ou 2, **caractérisée en ce que** le racloir (42, 42') est fixé avec une première extrémité contre l'élément convoyeur par un assemblage enfiché.

4. Machine (10) selon la revendication 3, **caractérisée en ce que** le racloir (42, 42') est muni sur sa première extrémité d'une fente (44) dans laquelle peut être reçue une zone de l'élément convoyeur.

5. Machine (10) selon la revendication 3 ou 4, **caractérisée en ce que** le racloir (42, 42') avec sa première extrémité est agencé dans un évidement (46) de l'élément convoyeur.

6. Machine (10) selon la revendication 5, **caractérisée en ce que** la fente (44) maintient le racloir (42, 42') perpendiculairement à la direction de transport, et **en ce que** l'évidement (46) de l'élément convoyeur maintient le racloir (42, 42') dans la direction de transport.

7. Machine (10) selon l'une quelconque des revendications 1 à 6, **caractérisée en ce que** le racloir (42) est fixé avec sa deuxième extrémité contre l'élément convoyeur par un assemblage soudé (52).

8. Machine (10) selon la revendication 7, **caractérisée en ce que** la longueur du racloir (42) est égale à un multiple de la longueur de l'assemblage soudé (52).

9. Machine (10) selon l'une quelconque des revendications 1 à 6, **caractérisée en ce que** le racloir (42') est fixé avec sa deuxième extrémité contre l'élément convoyeur par une vis (54).

10. Machine (10) selon la revendication 9, **caractérisée en ce que** l'axe longitudinal de la vis (54) s'étend au moins à peu près dans la direction de transport.

11. Machine (10) selon l'une quelconque des revendications précédentes, **caractérisée en ce que** l'élément convoyeur est un disque convoyeur (16), qui est muni d'évidements destinés à recevoir les tiges des végétaux et qui est propre à être entraîné en rotation autour d'un axe sensiblement vertical.

12. Machine (10) selon l'une quelconque des revendications précédentes, **caractérisée en ce que** la première extrémité du racloir (42, 42') est orientée vers l'axe de rotation de l'élément convoyeur.

13. Racloir (42, 42') amovible pour une machine (10) selon l'une quelconque des revendications précédentes.
